# EUROPEAN PATENT APPLICATION

(11) **EP 4 757 365 A1**
(43) Date of publication of application: **10.06.2026**
(21) Application number: 24218469.5
(22) Date of filing: 09.12.2024
(51) Int. Cl.: H04W 8/20, H04W 12/30, H04W 12/03, H04W 12/04

(54) **PROFILE TRANSFER FROM SOURCE EUICC TO TARGET EUICC**

(71) Applicant: Giesecke+Devrient Mobile Security Germany GmbH, 81677 München (DE)
(72) Inventor: Dietze, Claus, 81677 München (DE)
(74) Representative: Giesecke+Devrient IP

(57) **Abstract**

A method transferring a profile (P) from a source eUICC (e1) to a target eUICC (e2), characterized in that the profile transfer is effected via an intermediate eUICC (eint), to which the profile (P) is exported from the source eUICC (e1), and from which the profile (P) is exported to the target eUICC (e2).

## Description

### Field of the invention

The present invention relates to transfer of a profile from a source eUICC to a target eUICC. The invention further relates to export an import of profiles from and to eUICCs.

### Background of the invention and prior art

Mobile devices with eUICCs are used for communication in mobile networks. "Mobile" herein refers to wireless communication capability, as compared to wirebound networks. For mobile devices and eUICC different form factors are known, as set out in the documents [1]-[7]. The eUICC contains one or several profiles, also referred to subscriber profiles, enabling the mobile device to authenticate and attach to a mobile network.

Documents [1] [SGP.22] GSMA SGP.22 RSP Technical Specification Version 2.6, 20 September 2024, [2] [SGP.32] GSMA SGP.32 eSIM loT Technical Specification Version 1.2, 27 June 2024, [3] [SGP.02] SGP.02 - Remote Provisioning Architecture for Embedded UICC Technical Specification, Version 4.2, 07 July 2020, [5] [SGP.31] GSMA SGP.31 eSIM loT Architecture and Requirements Version 1.0, 19 April 2022, [6] [SGP.41] GSMA SGP.41 - loT Architecture and Requirements (unpublished at the date of filing the application), [7] [SGP.42] GSMA SGP.42 - Remote Provisioning Architecture for In Factory Provisioning Technical Specification (unpublished at the date of filing the application), describe management of profiles, also referred to subscriber profiles.

Document [8] SGP.60 defines several scenarios to export profiles from one eUICC, further-on also referred to as source eUICC, and to import it to either the same eUICC, or a different eUICC, said eUICC to which is imported, also being referred to as target eUICC. Profiles are hence transferred from the source eUICC to the target eUICC.

All profile presence outside any eUICC upon the profile transfer is desired or required to be effected in an encrypted form. A profile exported from an eUICC is exported in form of an exported profile package, EPP, which contains the encrypted profile.

The profile export is constructed such that upon exporting the profile from the source eUICC, the profile is deleted in the source eUICC.

In case an exported profile is later imported to the same eUICC, the exported profile package, EPP, can be encrypted with a key of the eUICC, be exported, later be re-imported to the same eUICC, and be decrypted with the eUICC's key.

In case of a profile transfer from a source eUICC to a different target eUICC by export from the source eUICC as an exported profile package, EPP, and later import to a different target eUICC, key management is required, since the source eUICC and the target eUICC have a different own key.

According to one alternative, the source eUICC knows the target eUICC and makes use of a corresponding key of the target eUICC to generate the exported profile package, EPP. This involves key exchange mechanisms or online connection between the two entities source eUICC and the target eUICC, in form of a peer-to-peer transfer.

An alternative option is discussed in SGP.60 that introduces an intermediate storage, which is essentially only a memory. Herein, the source eUICC exports the encrypted profile package, EPP, encrypted with a key of a target eUICC, and stores it to the intermediate storage. Since the exported profile package, EPP, is permanently encrypted, no special security measures of the intermediate storage are provided.

In this option of the intermediate storage, no online connection is needed between the source eUICC and the target eUICC. The encrypted profile package, EPP, encrypted with a key of the target eUICC is stored on the intermediate storage until it is needed for import into the target eUICC.

Using this concept may lead to unsuccessful transactions in case importing the encrypted profile package, EPP, into the target eUICC fails. Since then the profile has already been deleted in the source eUICC, another export for the same or a different target eUICC is not possible any more.

In addition, in case measures against such import failures are seeked to be taken, then security including preventing clones can be a challenge, as profile states in the source eUICC depend on export only (e.g. a status of the profile is "exported" in the source eUICC; hence the profile is released to be deleted), however no dependency on successful import in the target eUICC is given.

### Objective of the invention

It is an object of the present invention to provide a secure and flexible method of transferring a profile from a source eUICC to a target eUICC. In particular, a profile transfer solution based on profile export mechanisms is desired.

### Summary of the invention

The object of the invention is achieved by a method with following features, according to claim 1. Embodiments of the invention are presented in dependent claims.

In detail, the invention provides a method of transferring a profile from a source eUICC to a target eUICC. The method is characterized in that the profile transfer is effected via an intermediate eUICC to which the profile is exported from the source eUICC, and from which the profile is exported to the target eUICC.

The inventive solution has the advantages that all profile transfers are initiated by a profile export, for which secured mechanisms exist. As the intermediate entity, over which the profile is transferred between the source eUICC and the target eUICC, is not an unsecured intermediate storage, as in currently proposed solutions, however a secured eUICC compliant with security requirements for eUICCs. The currently proposed solutions rely on that the exported profile, which is exported to an intermediate entity, is and remains always encrypted, such that no high security requirements need to be fulfilled by the currently proposed intermediate entity. Hence, the intermediate storage currently discussed in [8] SGP.60 is proposed as an essentially unsecured intermediate storage. On the contrary, the present invention proposes to use as the intermediate entity an eUICC providing of the defined security features and facilities of a secured, preferably certified, eUICC.

Accordingly, the present invention provides a secure and flexible method of transferring a profile from a source eUICC to a target eUICC.

According to embodiments, the profile exported from the source eUICC is imported into the intermediate eUICC, including that the profile is installed in the intermediate eUICC.

The embodiments have additional advantages. For exporting installed profiles from eUICCs, defined mechanisms exist. In that not only the export from the source eUICC to the intermediate entity, here the intermediate eUICC, but also the export from the intermediate entity, here the intermediate eUICC, to the target eUICC is an export of an installed profile, the inventive solution effects all exports by defined secure mechanisms. It is prevented to use unsecure and possibly proprietary mechanism between a secure eUICC on the one hand and an unsecure entity on the other hand.

According to some embodiments, the profile is installed in the intermediate eUICC in a manner preventing enabling and/or activating and/or otherwise setting into an operative status the profile. According to such embodiments, it is ensured that the intermediate eUICC is used as intermediate storage location only, and not as operative eUICC.

According to some embodiments, the installing of the profile is performed based on a GSMA procedure profile download and installation, sub-procedure profile installation. Such embodiments have the additional advantage of high interoperability.

According to some embodiments, the export of the profile is performed in an encrypted profile package, particularly an encrypted profile package EPP according to [8] SGP.60. Such embodiments have the additional advantages of high interoperability with GSMA provisions for profile export, which requires profiles outside secure environments be secured in form of encrypted profile packages, EPPs.

Preferably, the encrypted profile package is always encrypted with a key of the eUICC to which the encrypted profile package is exported, which is particularly either the intermediate eUICC or the target eUICC.

The idea underlying the present invention is that, instead of introducing an intermediate storage, to introduce an intermediate eUICC that acts as a storage and re-encryption device. The offline connection between the source eUICC and the target eUICC is replaced by two online (peer-to-peer) profile export scenarios. For exporting the profile for the target eUICC, the source eUICC is using the key of the intermediate eUICC. The intermediate eUICC receives the encrypted profile package EPP(eint), encrypted with key of the intermediate eUICC, imports it, exports it again and generates an encrypted profile package EPP encrypted with a key of the target eUICC.

The inventive solution has the advantages of improved security, increased flexibility and improved success rates in case the target eUICC has to be replaced while the profile is no longer available for export in the source eUICC.

According to some embodiments, the transferring of the profile comprises the steps:
1) provide the source eUICC with said profile installed in the source eUICC;
2) provide to, and receive in, the source eUICC a key of the intermediate eUICC; said key of the intermediate eUICC may be provided to the source eUICC from the intermediate eUICC itself; alternatively, the key of the intermediate eUICC may be provided to the source eUICC from a different entity such as a server storing keys;
3) in the source eUICC, generate an encrypted profile package, comprising said profile, herein using the key of the intermediate eUICC for the encrypting;
4) transfer the encrypted profile package, encrypted with the key of the intermediate eUICC, from the source eUICC to the intermediate eUICC;
5) in the intermediate eUICC, receive the encrypted profile package, encrypted with the key of the intermediate eUICC;
6) at some time, in the intermediate eUICC, decrypt the encrypted profile package, with the key of the intermediate eUICC (e.g. in case a symmetric encryption scheme is used) or with a key corresponding to said intermediate eUICC's key (e.g. in case an asymmetric encryption scheme is used);
7) in the intermediate eUICC, receive a request from the target eUICC to import the profile to the target eUICC, and receive a key of the target eUICC;
8) in the intermediate eUICC, generate an encrypted profile package, comprising said profile, herein using the key of the target eUICC for the encrypting;
9) transfer the encrypted profile package, encrypted with the key of the target eUICC, from the intermediate eUICC to the target eUICC.

The sequence of the above described steps 5), 6) and 7) may be performed according to different types of embodiments. In a first type of embodiments, the profile is installed in the intermediate eUICC, which may be effected essentially or partly similar to profile installation in any eUICC. In a second type of embodiments, the encrypted profile package is temporarily stored it its form of an encrypted profile package. In a third type of embodiments, both profile installation and storing of the encrypted profile package is effected.

According to said first type of embodiments,
Step 6) comprises to import the profile, said import including said decrypt the encrypted profiled package, and said import further including to install the profile in the intermediate eUICC;
Step 8) comprises to generate the encrypted profile package from the profile installed, to the intermediate eUICC.

Further according to said first type of embodiments, the encrypted profiled package, encrypted with the intermediate eUICC's key, or/and the profile contained in said encrypted profiled package, encrypted with the intermediate eUICC's key, comprises metadata, in which metadata an enablement entry is included tagging the profile as not allowed for profile enabling in the intermediate eUICC, to effect that the profile is installed in the intermediate eUICC in a manner preventing enabling the profile in the intermediate eUICC.

The overall order of steps of steps 5), 6) and 7) in the first type of embodiments is 5) receive the encrypted profile package, 6) decrypt the encrypted profile package and import the profile, particularly install the profile, to the intermediate eUICC, 7) at some time, which may be in close timely relation, or later, receive a request from the target eUICC, and then perform step 8) to generate the encrypted profile package, encrypted with the target eUICC's key, on basis of the installed profile, installed in the intermediate eUICC.

According to said second type of embodiments,
Step 5) further comprises to store the encrypted profile package, encrypted with the intermediate eUICC key, to the intermediate eUICC, or to an extended storage coupled to or couplable to the intermediate eUICC;
Step 6), said decrypt of the encrypted profile package, encrypted with the intermediate eUICC's key, is executed only after step 7), said receive of said request from the target eUICC.

The overall order of steps of steps 5), 6) and 7) in the second type of embodiments is 5) receive the encrypted profile package, and store it to the intermediate eUICC or an accompanied extended storage, 7) at some time, which may be in close timely relation or later, receive a request from the target eUICC, and then perform 6) decrypt the encrypted profile package, and then perform step 8) to generate the encrypted profile package, encrypted with the target eUICC's key, by re-encrypting the just decrypted encrypted profile package, the re-encrypting now done with a key of the target eUICC.

When the encrypted profile package is stored (in the intermediate eUICC or in an accompanied extended (coupled or couplable) storage), then, either no import, including install, of the profile in the intermediate eUICC may be performed, or in addition import, including install, of the profile in the intermediate eUICC may be performed.

According to some embodiments, the intermediate eUICC comprises an entry in eUICC information data indicating and effecting that enabling and/or activating and/or otherwise setting into an operative status of profiles installed in the intermediate eUICC is disallowed. This embodiment has the advantage that it is ensured that the intermediate eUICC is used only as a preliminary storage before the exported profile is transferred to another eUICC, however not as an operative eUICC. This embodiment has the additional advantage that the central entry in the intermediate eUICC effects blocking enabling of all profiles ever imported (including installed) to the intermediate eUICC, without a necessity to adapt the profiles or corresponding profile packages themselves.

According to some embodiments, the entry in eUICC information data is realized as an entry in the eUICCinfo2 data. The effect of the entry in the eUICCInfo2, i.e. in the eUICC capabilities, of the intermediate eUICC eint is that in general no profile can be enabled (activated, otherwise set into operative status) in the intermediate eUICC eint. The second type of embodiments has the additional advantage that the profile metadata and metadata of the encrypted profile package EPP are not required to be adapted, and can remain as per the applicable standard.

### Brief description of the drawings

Embodiments of the invention will now be described with reference to the accompanying drawings, throughout which like parts are referred to by like references, and in which represents:
- Fig. 1: profile transfer from a source eUICC to a target eUICC by profile export, according to an option according to SGP.60;
- Fig. 2: profile transfer from a source eUICC to a target eUICC by profile export, according to embodiments of the present invention.

### Detailed description of the invention

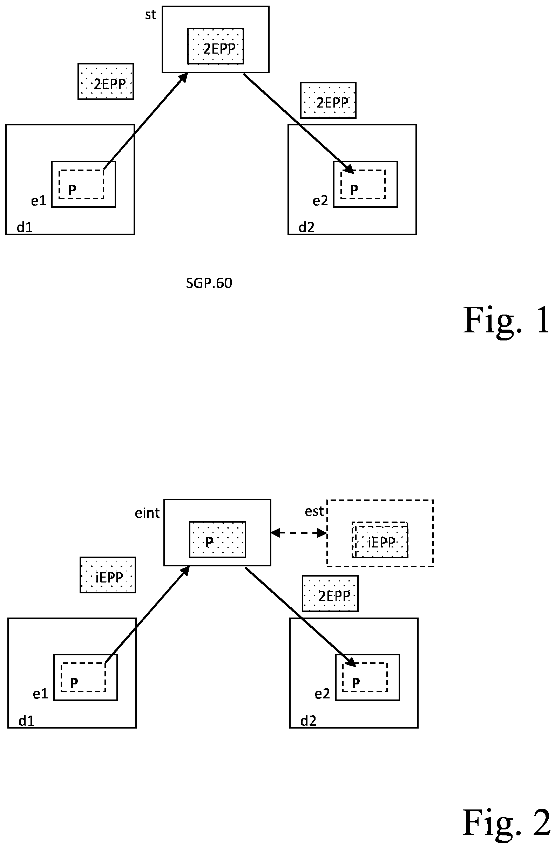

Fig. 1 shows a system arranged for profile transfer by profile export, according to an option according to SGP.60. The system comprises a source device d1 comprising a source eUICC e1, a target device d2 comprising a target eUICC e2, and an intermediate storage st constructed to store encrypted profile packages, EPPs.

In the following, transfer of a profile P from the source eUICC e1, hosted (comprised) in the source device d1, to the target eUICC e2, hosted (comprised) in the a target device d2, will be described.

The source eUICC e1 comprises a profile P. The source eUICC e1 receives a key of the target eUICC e2, by a mechanism which is not defined and is therefore selected at choice. The source eUICC e1 generates an encrypted profile package 2EPP comprising the profile P, herein using the key of the target eUICC e2 for encrypting the profile P. Herein, the indication 2EPP of the EPP is used to indicate that the EPP referenced to as 2EPP is encrypted with a key of the target eUICC e2. The source eUICC e1 exports the encrypted profile package EPP, and hereby exports the profile P in the encrypted profile package EPP, and deletes the profile P in the source eUICC e1. The export of the profile P is in other words done by the fire and forget principle, in that upon the export of the profile P (in the EPP), the profile in the source eUICC e1 is deleted, more or less immediately.

The exported encrypted profile package 2EPP, encrypted with the target eUICC e2 key, and comprising the profile P, is sent to an intermediate storages st. The intermediate storage st stores the exported encrypted profile package 2EPP. The exported encrypted profile package 2EPP is at that time encrypted with target eUICC e2 key. The exported encrypted profile package 2EPP is or remains in the intermediate storage st until it is requested to be downloaded or imported into the target eUICC e2. The target eUICC e2 requests download or import of the encrypted profile package 2EPP. In reaction to the request, the encrypted profile package 2EPP is downloaded from the intermediate storage st to the target eUICC e2. The profile P imported to the target eUICC e2. The import comprises that the encrypted profile package 2EPP is decrypted (and unpacked) in the target eUICC e2, and the profile P from the decrypted encrypted profile package 2EPP is installed in the target eUICC e2. The Profile P is then available in target eUICC e2 for usage.

Fig. 2 shows a system arranged for profile transfer by profile export, according embodiments of the present invention. The system comprises a source device d1 comprising a source eUICC e1, a target device d2 comprising a target eUICC e2, and an intermediate eUICC eint as profile storage, which is constructed to store installed profiles, in other words profiles in an ordinarily installed form, not as encrypted profile packages EPPs.

Optionally, the system of Fig. 2 may further comprise an extended storage est, which may be similarly constructed to the intermediate storage st, which is coupled or couplable to the intermediate eUICC eint, and which extended storage est is constructed to store encrypted profile packages, EPPs.

In the following, with reference to Fig. 2, transfer of a profile P from the source eUICC e1, hosted (comprised) in the source device d1, to the target eUICC e2, hosted (comprised) in the a target device d2, will be described, according to embodiments of the invention.

According to Fig. 2, the source eUICC e1 comprises a profile P. The source eUICC e1 receives a key of the intermediate eUICC eint. The procedure for said key receiving can be selected at choice. The source eUICC e1 generates an encrypted profile package iEPP comprising the profile P, herein using the key of the intermediate eUICC eint. Herein, the indication iEPP of the EPP is used to indicate that the EPP referenced to as iEPP is encrypted with a key of the intermediate eUICC eint.

The intermediate eUICC eint receives the encrypted profile package iEPP, which is encrypted with its own key, i.e. with the key of the intermediate eUICC eint. The receiving of the profile package iEPP may be performed similar to the initial steps in the procedure described in [1] SGP.22, section 3.1.3, "Profile Download and Installation", or comparable sections in documents [2]-[7].

According to a first type of embodiments of the invention, the intermediate eUICC eint imports the received encrypted profile package iEPP.

Herein, the import of the encrypted profile package iEPP comprises following steps:
- Decrypt (and unpack) the received profile package iEPP with the key of the intermediate eUICC eint used for encryption (if a symmetric key system is used), or with a key corresponding to the key used for the encryption when generating the iEPP (if an asymmetric key system is used);
- Install the profile P from the decrypted (and unpacked) encrypted profile package iEPP in the intermediate eUICC eint.

In preferred embodiments, the import of the encrypted profile package iEPP according to the first embodiment, comprising decryption and profile installation, is performed similar to profile import to any operative eUICC, preferably as described in [1] SGP.22, section 3.1.3, Profile Download and Installation, or comparable sections in documents [2]-[7].

According to a second type of embodiments of the invention, the intermediate eUICC eint stores the received encrypted profile package iEPP, either in the intermediate eUICC eint itself, or in an extended intermediate storage est coupled or couplable to the intermediate eUICC eint.

According to a third type of embodiments, the profile P is both installed in the intermediate eUICC eint, as described as the first type of embodiments, and stored as encrypted profile package iEPP, encrypted with a key of the intermediate eUICC eint, as described as the second type of embodiments.

Further according to the first type of embodiments of the invention, the target eUICC e2 sends to the intermediate eUICC eint a request to download or import the profile P. With the request, the target eUICC e2 sends a key of its, i.e. a key of the target eUICC e2, to the intermediate eUICC eint. The intermediate eUICC eint receives the request. Upon receipt of the request, the intermediate eUICC eint, based on the profile P installed in the intermediate eUICC eint, generates an encrypted profile package 2EPP, comprising the profile P, herein using the key of the target eUICC e2 for encrypting the profile P.

Further according to the second type of embodiments of the invention, the target eUICC e2 sends to the intermediate eUICC eint a request to download or import the profile P. With the request, the target eUICC e2 sends a key of its, i.e. a key of the target eUICC e2, to the intermediate eUICC eint. The intermediate eUICC eint receives the request. Upon receipt of the request, the intermediate eUICC eint, retrieves the stored encrypted profile package iEPP, which is encrypted with its own key of the intermediate eUICC eint. Further, the intermediate eUICC eint, decrypts the encrypted profile package iEPP with its own key. Further, the intermediate eUICC eint generates an encrypted profile package 2EPP, comprising the profile P, herein using the key of the target eUICC e2 for encrypting the profile P. Particularly, in the second type of embodiments, the intermediate eUICC eint performs a keying-swap or keying-change process on the encrypted profile package, decrypting the encrypted profile package with its own key, and encrypting (or re-encrypting) it with the key of the target eUICC's e2.

In the third embodiments, either of the profile download or import to the target eUICC e2, as described above, may be selected.

In both the first, the second and the third types of embodiments, the intermediate eUICC eint now provides of an encrypted profile package 2EPP, comprising the profile P, and being encrypted with the key of the target eUICC e2.

Further in the procedure, the encrypted profile package 2EPP, comprising the profile P, and being encrypted with the key of the target eUICC e2, is downloaded from the intermediate eUICC eint to the target eUICC e2 and imported into the target eUICC e2.

Herein, the import of the encrypted profile package 2EPP to the target eUICC e2 comprises following steps:
- Decrypt (and unpack) the received profile package 2EPP with the key of the target eUICC e2 used for encryption (if symmetric key system), or with a key corresponding to the key used for the encryption when generating the 2EPP (if asymmetric key system);
- Install the profile P from the profile package 2EPP in the target eUICC e2.

In some embodiments, the profile P is enabled upon its installation. In some embodiments, the profile P is enabled in a separate enabling step, which may be later.

The profile P is now ready for use in the target eUICC e2.

In preferred embodiments, the import of the encrypted profile package 2EPP, comprising decryption and profile installation, is performed similar to profile import to any operative eUICC, preferably as described in [1] SGP.22, section 3.1.3, Profile Download and Installation, or comparable sections in documents [2]-[7].

According to some embodiments, the intermediate eUICC eint is constructed to prevent usage of a profile P installed in the intermediate eUICC eint.

According to some embodiments, the intermediate eUICC eint is constructed to allow installing profiles, however to prevent enabling, activating or otherwise setting into an operational mode (status), of a profiles installed in the intermediate eUICC eint.

The mechanism of preventing the profile enabling of a profile P to be installed in the intermediate eUICC eint may be realized in that an encrypted profile package iEPP generated for the intermediate eUICC eint, encrypted with the intermediate eUICC's key, comprises an entry in the profile or in the encrypted profile package iEPP indicating that enabling (or activating or otherwise setting into an operative status) the profile in the intermediate eUICC eint is forbidden. To achieve that the profile P cannot be enabled in the intermediate eUICC eint, but can be enabled in the target eUICC e2, according to an embodiment, the metadata only of the encrypted profile package iEPP encrypted with the intermediate eUICC eint key indicate that enabling (activating, otherwise setting into operative mode/status) is disallowed, whereas the metadata of the encrypted profile package 2EPP encrypted with the target eUICC e2 key are such that enabling the profile is allowed and possible in the target eUICC e2. According to another embodiment, the metadata in the profile package contain, together with the indication that profile enabling (activating, otherwise setting into operative mode/status) is disallowed, an identifier of the eUICC, namely the intermediate eUICC eint, in which enabling (activating, otherwise setting into operative mode/status) the profile shall be disallowed.

According to a first type of embodiment, the entry indicating that profile enabling (activating, setting into operative status) in the intermediate eUICC eint is disallowed is contained in the profile metadata, or in the metadata of the encrypted profile package iEPP.

According to a second type of embodiments, the entry indicating that profile enabling (or activating, or setting into operative status otherwise) is disallowed is contained in the eUICCInfo2, i.e. in the eUICC capabilities, of the intermediate eUICC eint.

### Cited documents

[1] [SGP.22] GSMA SGP.22 RSP Technical Specification Version 2.6, 20 September 2024
[2] [SGP.32] GSMA SGP.32 eSIM loT Technical Specification Version 1.2, 27 June 2024
[3] [SGP.02] SGP.02 - Remote Provisioning Architecture for Embedded UICC Technical Specification, Version 4.2, 07 July 2020
[5] [SGP.31] GSMA SGP.31 eSIM loT Architecture and Requirements Version 1.0, 19 April 2022
[6] [SGP.41] GSMA SGP.41 - loT Architecture and Requirements (unpublished at the date of filing the application)
[7] [SGP.42] GSMA SGP.42 - Remote Provisioning Architecture for In Factory Provisioning Technical Specification (unpublished at the date of filing the application)
[8] SGP.60 Profile Export (unpublished at the date of filing the application)

## Claims

1. An method of transferring a profile (P) from a source eUICC (e1) to a target eUICC (e2), **characterized in that** the profile transfer is effected via an intermediate eUICC (eint), to which the profile (P) is exported from the source eUICC (e1), and from which the profile (P) is exported to the target eUICC (e2).

2. The method according to claim 1, wherein the profile (P) exported from the source eUICC (e1) is imported into the intermediate eUICC (eint), including that the profile is installed in the intermediate eUICC (eint).

3. The method according to claim 2, wherein the profile (P) is installed in the intermediate eUICC (eint) in a manner preventing enabling and/or activating and/or otherwise setting into an operative status the profile (P) in the intermediate eUICC (eint).

4. The method according to claim 2 or 3, wherein the installing of the profile (P) is performed based on a GSMA procedure profile download and installation, sub-procedure profile installation.

5. The method according to any of claims 1 to 4, wherein the export of the profile (P) is performed in an encrypted profile package (iEPP; 2EPP).

6. The method according to claim 5, wherein the encrypted profile package (iEPP; 2EPP) is encrypted with a key of the eUICC to which the encrypted profile package (iEPP; 2EPP) is exported.

7. The method according to any of claims 1 to 6, wherein the transferring of the profile (P) comprises the steps:
1) provide the source eUICC (e1) with said profile (P) installed in the source eUICC (e1);
2) provide to and receive in the source eUICC (e1) an intermediate eUICC (eint) key, from an intermediate eUICC (eint) or from a different entity;
3) in the source eUICC (e1), generate an encrypted profile package (iEPP), comprising said profile (P), using the intermediate eUICC (eint) key for encrypting;
4) transfer the encrypted profile package (iEPP), encrypted with the intermediate eUICC (eint) key, from the source eUICC (e1) to the intermediate eUICC (eint);
5) in the intermediate eUICC (eint), receive the encrypted profile package (iEPP), encrypted with the intermediate eUICC (eint) key;
6) in the intermediate eUICC (eint), decrypt the encrypted profile package (iEPP), with the intermediate eUICC (eint) key or with a key corresponding to said intermediate eUICC (eint) key;
7) in the intermediate eUICC (eint), receive a request from the target eUICC (e2) to import the profile (P) to the target eUICC (e2), and receive a target eUICC (e2) key;
8) in the intermediate eUICC (eint), generate an encrypted profile package (2EPP), comprising said profile (P), using the target eUICC (e2) key for encrypting;
9) transfer the encrypted profile package (2EPP), encrypted with the target eUICC (e2) key, from the intermediate eUICC (eint) to the target eUICC (e2).

8. The method according to claim 7, wherein
Step 6) comprises to import the profile (P), said import including said decrypt the encrypted profiled package (iEPP), and said import further including to install the profile (P) in the intermediate eUICC (eint);
Step 8) comprises to generate the encrypted profile package (2EPP) from the profile (P) installed, to the intermediate eUICC (eint).

9. The method according to claim 7 or 8, wherein the encrypted profiled package (iEPP), encrypted with the intermediate eUICC's (eint) key, or/and the profile (P) contained in said encrypted profiled package (iEPP), encrypted with the intermediate eUICC's (eint) key, comprises metadata, in which metadata an enablement entry is included tagging the profile (P) as not allowed for profile enabling in the intermediate eUICC (eint),
so as to effect that the profile (P) is installed in the intermediate eUICC (eint) in a manner preventing enabling the profile (P) in the intermediate eUICC (eint).

10. The method according to claim 7, wherein
Step 5) further comprises to store the encrypted profile package (iEPP), encrypted with the intermediate eUICC (eint) key, to the intermediate eUICC (eint), or to an extended storage (est) coupled to or couplable to the intermediate eUICC (eint);
Step 6), said decrypt of the encrypted profile package (iEPP), encrypted with the intermediate eUICC's (eint) key, is executed only after step 7), said receive of said request from the target eUICC (e2).

11. The method according to claim 10, wherein in the intermediate eUICC (eint), either no import, including install, of the profile (P) is performed, or in addition import, including install, of the profile (P) is performed.

12. The method according to any of claims 1 to 11, wherein the intermediate eUICC (eint) comprises an entry in eUICC information data indicating and effecting that enabling and/or activating and/or otherwise setting into an operative status of profiles installed in the intermediate eUICC is disallowed.

13. The method according to claim 12, wherein the entry in eUICC information data is realized as an entry in the eUICCinfo2 data.

14. An intermediate eUICC (eint) constructed to perform a method according to any of claims 1 to 13 in cooperation with a source eUICC (e1) and a target eUICC (e2), to transfer a profile (P) from the source eUICC (e1) to the target eUICC (e2).

15. A system comprising a source eUICC (e1) and a target eUICC (e2), **characterized by** further comprising an intermediate eUICC (eint) according to claim 14.
